# EUROPÄISCHE PATENTSCHRIFT

(11) **EP 2 008 510 B1**
(45) Veröffentlichungstag und Bekanntmachung des Hinweises auf die Patenterteilung: **13.10.2010**
(21) Anmeldenummer: 07012790.7
(22) Anmeldetag: 29.06.2007
(51) Int. Cl.: A01K 1/01, B01J 20/24

(54) **Verfahren zur Herstellung eines absorbierenden Materials, absorbierendes Material und dessen Verwendung**
Method for manufacturing an absorbent material, absorbent material and its use
Procédé destiné à la fabrication d'un matériau absorbant, matériau absorbant et son utilisation

(43) Veröffentlichungstag der Anmeldung: 31.12.2008
(73) Patentinhaber: AGROS Trading GmbH, 4063 Hörsching (AT)
(72) Erfinder: Fuchhuber, Klaus, 4063 Hörsching (AT)
(74) Vertreter: Remus, Alvaro Johannes

(56) Entgegenhaltungen:
- US-A1- 2003 131 799
- US-A1- 2003 205 204
- US-B1- 6 220 206

## Beschreibung

### Erfindungsgebiet

Die Erfindung betrifft ein Verfahren zur Herstellung eines absorbierenden Materials aus mindestens einem pflanzlichen Rohstoff sowie ein in diesem Verfahren hergestelltes absorbierendes Material. Die Erfindung betrifft ferner Verwendungen des absorbierenden Materials.

### Hintergrund der Erfindung

Absorbierende Materialen finden insbesondere bei der Dekontamination, beispielsweise dem Binden und Entsorgen von Verunreinigungen durch Öl oder Lösungsmittel, und als Einstreu für Tiere Anwendung. Die absorbierenden Materialien werden dabei meist in Form von Granulat oder Pellets mit großer äußerer und innerer Oberfläche eingesetzt, so dass größere Mengen an Flüssigkeit, wie beispielsweise Öl, Lösungsmittel oder flüssige Exkremente, absorbiert bzw. gebunden werden können.

Aus der DE 102 44 122 C1 ist beispielsweise ein Granulat zur Entfernung von ölartigen Flüssigkeiten von Wasseroberflächen bekannt, das in einer Matte demobilisiert ist. Als Granulat werden hier Braunkohlefraktion, Baumrinde, Torf, Pflanzenfasern, Holz und Sägespäne vorgeschlagen.

Aus der DE 42 03 928 A1 ist ferner ein Bindemittel für Mineralöle, Chemikalien und Flüssigkeiten bekannt, das aus durch Hitzeeinwirkung gepufften Getreidekörnern besteht, insbesondere Mais- oder Reiskörnern, die nach der Hitzebehandlung zu einem feinen Pulver mit einem Schüttgewicht von 50 g/l zerkleinert wurden.

Die DE 198 24 132 A1 offenbart eine Einstreu für die Tierhaltung, die aus faserigem biologischen Material wie Stroh, Hanf, Hobelspänen oder Elefantengras besteht. Das faserige Material wird zur Herstellung von Pellets zunächst zerkleinert und anschließend zu Pellets mit einem Durchmesser von mindestens 20 mm gepresst.

Die DE 100 64 347 A1 offenbart eine Einstreu für Katzen und Kleintiere, wobei als absorbierendes Material Zuckerrübenschnitzel und/oder Citruspellets eingesetzt werden. Um ein Verklumpen des getrockneten pflanzlichen Materials bei Feuchtigkeitszufuhr zu ermöglichen wird dem Material ein wasserlösliches Polymer als Hilfsstoff zugegeben.

Aus der DE 195 43 311 C1 ist ferner eine Tiereistreu bekannt, die im Wesentlichen aus Holzpartikeln besteht, denen Guar-Mehl zugegeben wurde, um ein Verklumpen bei Feuchtigkeitszufuhr zu ermöglichen.

Die weltweit meistverkaufte Katzenstreu besteht hauptsächlich aus Betonit, einem tonartigen Material, das bei Feuchtigkeitszufuhr selbstständig verklumpt. Eine Tiereinstreu aus Betonit ist beispielsweise aus der US-A-5 000 115 bekannt. Darüber hinaus wird Betonit auch als Bindemittel und Verdicker verwendet, gemäß der DE 41 01 243 A1 beispielsweise als Zusatz zu zellulosehaltigem Tierstreumaterial wie Holz, Papier oder Pappe.

Die US 6,220,206 B1 offenbart ein Katzeneinstreu, das aus einem Maismehl-Nebenprodukt und einem Weizen-Nebenprodukt mittlerer Qualität besteht. Zur Herstellung des Einstreus wird dieses Material gemischt und anschließend als Vorbehandlung für die weitere Verarbeitung angefeuchtet sowie auf eine Temperatur von ungefähr 110 - 115 °C erhitzt. Das so behandelte Gemisch wird anschließend in einem Extrusionsprozess zu Pellets verarbeitet, die dann zu kleineren Partikeln mit einem Durchmesser von ca. 2 mm gemahlen werden.

Die US 2003/0131799 A1 offenbart ein absorbierendes Material, das als Tiereinstreu oder als Dekontaminationsmittel verwendet werden kann. Das absorbierende Material besteht hauptsächlich aus gemahlenem Ganzkorn-Mais, der extrudiert und anschließend gemahlen wird.

Die US 2003/0205204 A1 offenbart ein Tiereinstreu, das aus Ganzkorn-Maismehl und Weizenkleie hergestellt wird. Zur Herstellung des Einstreus wird das Gemisch pelletiert.

Die bekannten absorbierenden Materialen haben aber den Nachteil, dass sie entweder nicht zu 100 % aus nachwachsenden Rohstoffen hergestellt und somit nicht vollständig biologisch abbaubar sind oder aber nicht ohne Hilfsstoffe auskommen, die beispielsweise ein Verklumpen erst möglich machen. Darüber hinaus sind die bereits bekannten selbstständig klumpenden Materialien relativ schwer und nicht sehr ergiebig.

### Zusammenfassung der Erfindung

Es ist Aufgabe der Erfindung, ein absorbierendes Material und ein Verfahren zur Herstellung dieses Materials zu schaffen, das bei Feuchtigkeitszufuhr selbstständig klumpt sowie sehr ergiebig ist und ein geringes Eigengewicht aufweist.

Die Aufgabe wird durch ein Verfahren der eingangs genannten Art gelöst, welches die folgenden Schritte umfasst:
- Mahlen ganzer Getreidekörner;
- Extrudieren der gemahlenen Getreidekörner zu Kügelchen;
- Kühlen der Kügelchen vor dem mahlen, und
- Mahlen der Kügelchen zum absorbierenden Material.

Durch das erfindungsgemäße Herstellungsverfahren entsteht ein absorbierendes Material, das sehr leicht und ergiebig ist. Durch die Extrusion wird dabei eine extrem große Oberfläche erzeugt, d. h. die in dem erfindungsgemäßen Verfahren hergestellten Kügelchen weisen eine schwammartige Struktur mit sehr großer Aufnahmefläche auf. Das hergestellte absorbierende Material nimmt daher Flüssigkeiten extrem schnell und mit sehr hoher Aufnahmekapazität auf. Darüber hinaus werden Geruchstoffe lang anhaltend gebunden. Aufgrund der Herstellung im erfindungsgemäßen Verfahren hat das absorbierende Material ein sehr geringes Gewicht (bis zu zwei Drittel weniger als herkömmliche Produkte wie beispielsweise Betonit), so dass die Kosten für Transport und Entsorgung deutlich geringer sind. Darüber hinaus können Transport und Entsorgung hierdurch auch deutlich umweltfreundlicher gestaltet werden. Durch das erfindungsgemäße Verfahren entstehen also staubarme, vielporige Kügelchen mit hoher Saugkraft und geruchsbindender Wirkung.

Damit die vorteilhafte Struktur des Materials in den folgenden Verfahrensschritten erhalten bleibt, ist vorgesehen, die Kügelchen vor dem Mahlen zu kühlen.

Überraschender Weise hat sich ferner herausgestellt, dass durch die Verarbeitung ganzer Getreidekörner ein absorbierendes Material entsteht, das bei Feuchtigkeitszufuhr selbstständig Klumpen bildet. Die dem pflanzlichen Rohstoff offensichtlich innewohnende Eigenschaft des Klumpens wird durch das erfindungsgemäße Herstellungsverfahren weiter verstärkt. Das erfindungsgemäße absorbierende Material kann also ohne weitere Hilfsstoffe verwendet werden. Dadurch, dass das absorbierende Material aus 100 % natürlichen, nachwachsenden Rohstoffen hergestellt wird, ist es darüber hinaus biologisch abbaubar und kompostierfähig. Hierdurch und aufgrund des geringen Eigengewichts ist die Entsorgung des Materials umweltfreundlich und mit deutlich geringeren Kosten versehen. Bei der Verwendung als Tiereinstreu kann das verklumpte, d. h. mit Urin benetzte, absorbierende Material, sofern dies örtlich erlaubt ist, beispielsweise einfach über die Toilette entsorgt werden, so dass Gebühren für Hausmüll eingespart werden können. Insgesamt entsteht mittels des erfindungsgemäßen Verfahrens aus rein pflanzlichen Rohstoffen (ganze Getreidekörner) also ein selbstständig klumpendes absorbierendes Material, mit dem zu entsorgende Flüssigkeiten wie beispielsweise Öle, Lösungsmittel, Tierexkremente oder Ähnliches sehr schnell und mit hoher Kapazität gebunden werden können.

In besonders vorteilhafter Ausgestaltung des erfindungsgemäßen Verfahrens ist vorgesehen, dass die Getreidekörner bis auf eine Korngröße von kleiner als 3 mm, vorzugsweise kleiner als 2 mm, besonders bevorzugt kleiner als 1 mm, gemahlen werden. Vorzugsweise sollte dabei ein Anteil von maximal 20 % der gemahlenen Getreidekörner, besonders bevorzugt maximal 15 %, eine Korngröße kleiner als 250 µm aufweist. Ein derart vorbereiteter Rohstoff kann in dem folgenden Extrusionsschritt optimal weiter verarbeitet werden. Bei Bedarf können die gemahlenen Getreidekörner vor der Extrusion noch einmal gemischt werden.

Um ein optimales Ergebnis im Extrusionsschritt zu erzielen, sollten die gemahlenen Getreidekörner einen Feuchtgehalt von 10 bis 20 %, vorzugsweise 12 bis 15 %, besonders bevorzugt 13 bis 14 %, insbesondere 13.5 %, aufweisen. Wenn der tatsächliche Feuchtgehalt aufgrund der Beschaffenheit der Getreidekörner von diesen Werten abweichen sollte, ist erfindungsgemäß bevorzugt, den Feuchtgehalt durch Befeuchten oder Trocknen gezielt auf den optimalen Wert einzustellen.

Vorzugsweise wird als pflanzlicher Rohstoff im erfindungsgemäßen Verfahren Ganzkorn-Mais (*Zea mays*) verarbeitet. Es können aber auch andere Getreidekörner verwendet werden. Bei bestimmten Anwendungen, beispielsweise bei der Verwendung als Tiereinstreu, kann das absorbierende Material aber auch aus einem Gemisch verschiedener Getreidearten hergestellt werden. In diesem Fall ist vorgesehen, dass ganze Körner verschiedener Getreidearten vor dem Mahlen gemischt werden. Es hat sich beispielsweise als besonders vorteilhaft herausgestellt, wenn ungefähr 80 bis 99 % Ganzkorn-Mais mit 1 bis 20 % Ganzkorn-Weizen, vorzugsweise 85 bis 95 % Ganzkorn-Mais mit 5 bis 15 % Ganzkorn-Weizen, besonders bevorzugt ungefähr 90 % Ganzkorn-Mais mit ungefähr 10 % Ganzkorn-Weizen, gemischt werden. Eine solche Mischung führt zu einem absorbierenden Material mit hervorragender Klumpenbildung, geringem Gewicht, bester Saugkraft und hoher Aufnahmekapazität sowie sehr guter Geruchsbindung.

In besonderer Ausgestaltung des erfindungsgemäßen Verfahrens ist ferner vorgesehen, dass die extrudierten Getreidekörner zusätzlich granuliert werden, um die Kügelchen auf eine definierte Größe einstellen zu können und ein homogenes Endprodukt bzw. Material zu erhalten.

Insbesondere ist vorgesehen, dass die gemahlenen Getreidekörner zu Kügelchen mit einem Durchmesser von ungefähr 1 bis 3 cm, vorzugsweise ungefähr 1.5 bis 2.5 cm, besonders bevorzugt ungefähr 2 cm, extrudiert bzw. granuliert werden.

Das Mahlen der Kügelchen nach der Extrusion bzw. dem Granulieren sollte in vorteilhafter weise derart erfolgen, dass die Partikel des absorbierenden Materials zu mindestens 80 %, vorzugsweise mindestens 85 %, besonders bevorzugt mindestens 90 %, insbesondere mindestens 95 %, einen Durchmesser von 0.2 bis 10 mm, vorzugsweise 0.3 bis 8 mm, aufweisen.

Um ein möglichst staubarmes absorbierendes Material zu erhalten, kann das absorbierenden Material nach dem Mahlen gesiebt werden, wobei durch das Sieben staubförmiges Material, vorzugsweise Material mit einem Partikeldurchmesser kleiner als 0.4 mm, insbesondere kleiner als 0.3 mm, abgetrennt wird.

Ein besonders vorteilhaftes absorbierendes Material liegt vor, wenn das Material ein Schüttgewicht zwischen 300 und 500 g/l, vorzugsweise zwischen 350 und 450 g/l, aufweist.

Die Aufgabe wird auch ferner ein absorbierendes Material aus mindestens einem pflanzlichen Rohstoff gelöst, bei dem der pflanzliche Rohstoff eine Mischung aus 80 bis 99 % Ganzkorn-Mais und 1 bis 20 % Ganzkorn-Weizen umfasst. Das erfindungsgemäße Material aus Getreide bildet bei Feuchtigkeitszufuhr selbstständig Klumpen und kann daher ohne weitere Hilfsstoffe verwendet werden. Ein Zusatz von klumpenbildenden oder geruchsbindenden Stoffen ist nicht erforderlich. Dadurch, dass das absorbierende Material aus 100 % natürlichen, nachwachsenden Rohstoffen hergestellt wird, ist es darüber hinaus biologisch abbaubar und kompostierfähig. Hierdurch und aufgrund des geringen Eigengewichts ist die Entsorgung des Materials umweltfreundlich und mit deutlich geringeren Kosten versehen. Das erfindungsgemäße Material ist also ein selbstständig klumpendes absorbierendes Material, mit dem zu entsorgende Flüssigkeiten wie beispielsweise Öle, Lösungsmittel, Tierexkremente oder Ähnliches sehr schnell und mit hoher Kapazität gebunden werden können.

Erfindungsgemäß besteht das erfindungsgemäße Material also aus Getreide aus der Familie der Süßgräser (Poaceae), nämlich aus Ganzkorn-Mais (*Zea mays*) und Ganzkorn-Weizen (*Triticum spec*.).

Besonders bevorzugt ist erfindungsgemäß ein Material, bei dem der pflanzliche Rohstoff eine Mischung aus 85 bis 95 % Ganzkorn-Mais und 5 bis 15 % Ganzkorn-Weizen, bevorzugt ungefähr 90 % Ganzkorn-Mais und 10 % Ganzkorn-Weizen, umfasst. Eine solche Mischung führt zu einem absorbierenden Material mit hervorragender Klumpenbildung, geringem Gewicht, bester Saugkraft und hoher Aufnahmekapazität sowie sehr guter Geruchsbindung.

In einer besonderen Ausgestaltung der Erfindung umfasst das erfindungsgemäße absorbierendes Material in vorteilhafter Weise Partikel, die zu mindestens 80 %, vorzugsweise mindestens 85 %, besonders bevorzugt mindestens 90 %, insbesondere mindestens 95 %, einen Durchmesser von 0.2 bis 10 mm, vorzugsweise 0.3 bis 8 mm, aufweisen. Idealer Weise sollte das absorbierende Material ein Schüttgewicht zwischen 300 und 500 g/l, vorzugsweise zwischen 350 und 450 g/l, haben. Ein solches Material ist sehr effektiv und leicht zu handhaben. Darüber hinaus ist es bei Berührung sehr angenehm, so dass es beispielsweise bei der Verwendung als Einstreu für Haustiere sehr sanft für die Pfoten der Tiere ist und daher sehr gut angenommen wird.

Aufgrund der genannten positiven Eigenschaften eignet sich das erfindungsgemäße absorbierende Material optimal für eine Verwendung als Einstreu für Tiere. Dabei kann es je nach Größe der Kügelchen sowohl für Haustiere wie beispielsweise Katzen als auch für größere Tiere wie beispielsweise Pferde verwendet werden.

Aufgrund der hervorragenden Saugfähigkeit kann das erfindungsgemäße absorbierende Material aber auch als Dekontaminationsmittel verwendet werden. Es eignet sich hierbei besonders für ölartige Flüssigkeiten, Benzin oder Lösungsmittel, da diese sehr schnell aufgenommen und somit neutralisiert werden können.

Das erfindungsgemäße absorbierende Material kann aber beispielsweise auch als Reinigungsmittel verwendet werden, das es Flüssigkeiten sehr schnell aufnimmt und für einen Benutzer angenehm zu handhaben ist.

Eine Vorrichtung zur Durchführung des erfindungsgemäßen Verfahrens und/oder zur Herstellung des erfindungsgemäßen absorbierenden Materials weist mindestens eine Einrichtung zum Mahlen von Körnern auf, die sich dadurch auszeichnet, dass ein Extruder zur Erzeugung von Kügelchen aus den gemahlenen Körnern vorgesehen ist. Der Extruder weist mindestens zwei Schneckenwellen auf, die ihrerseits vorzugsweise jeweils einen Schneckendurchmesser von 60 bis 70 mm, insbesondere 65 bis 67 mm, aufweisen. Die Schneckenlänge beträgt ungefähr das 25-fache des Durchmessers (25xD). Der Extruder hat vorzugsweise eine Antriebsleistung von 180 kW und erreicht eine Schneckendrehzahl von maximal 800 Upm.

Der Extruder kann zusätzlich mit einem Granulator versehen sein, welcher vorzugsweise 6 bis 10 Messer, insbesondere 8 Messer, umfasst. Der Granulator hat vorzugsweise eine Antriebsleistung von 3 kW und erreicht eine Messerdrehzahl von maximal 3000 Upm.

Die Vorrichtung kann ferner beispielsweise einen Walzenstuhl zum Mahlen der extrudierten bzw. granulierten Kügelchen, eine Kühleinrichtung zum Kühlen der Kügelchen und ein Sieb zum Abtrennen von Staubpartikeln umfassen.

### Beschreibung vorteilhafter und bevorzugter Ausführungsformen der Erfindung

Die Erfindung wird im Weiteren anhand der folgenden Ausführungsform beispielhaft näher erläutert.

Herstellung eines Einstreus für Haustiere aus Mais und Weizen:

Ganzkorn-Mais und Ganzkorn-Weichweizen werden im Verhältnis von ca. 90 % Mais zu ca. 10 % Weizen gemischt und anschließend gemahlen. Das gemahlene Rohmaterial sollte eine Schüttdichte von mehr als 600g/l und einen Feuchtgehalt von ungefähr 13.5 % aufweisen. Die Korngröße sollte unter 2 mm Durchmesser bei einer Korngrößenverteilung von maximal 15 % an Partikeln mit einem Durchmesser kleiner als 250 µm liegen.

Die gemahlenen Getreidekörner werden nochmals gemischt und anschließend mit einem Doppelschnecken - Extruder zu Kügelchen mit einem Durchmesser von ungefähr 2 cm extrudiert. Die Schnecken des Extruders weisen jeweils einen Durchmesser von 66.2 mm auf. Die Schneckenlänge beträgt 25 x D. Der Extruder hat eine Antriebsleistung von 180 kW und erreicht eine Schneckendrehzahl von maximal 800 Upm. Die Kügelchen werden mittels eines Granulators erzeugt, der 8 Messer aufweist und eine Antriebsleistung von 3 kW hat sowie eine Messerdrehzahl von 3000 Upm erreicht.

Die Kügelchen werden in einem Kühler gekühlt und nach ca. 1 Stunde mit einem Walzenstuhl zum Endprodukt, d. h. zum absorbierenden Material, vermahlen. Vor der Verpackung wird der Staubanteil mit einem Partikeldurchmesser kleiner als 0.33 mm durch ein Sieb abgetrennt. Das absorbierende Material hat dann ein Schüttgewicht von 350 bis 450 g/l, wobei die Kornverteilung zu 95 % zwischen 0.33 und 8 mm liegt.

Das derart hergestellte absorbierende Material kann beispielsweise als Katzenstreu verwendet werden, wobei die Partikel die Flüssigkeit sofort aufsaugen und feste Klumpen bilden. Gerüche werden dabei eingeschlossen. Die Klumpen können dann täglich über die Haustoilette (falls erlaubt), die Biotonne oder den Hausmüll entsorgt werden.

Das in dem erfindungsgemäßen Verfahren hergestellte absorbierende Material weist die folgenden Vorteile auf:
- Es ist saugstark,
- bildet feste Klumpen,
- bindet Geruch schnell und anhaltend,
- benötigt keine Hilfs- und Zusatzstoffe,
- ist aufgrund der Körnung extrem sanft für die Tiere,
- umweltfreundliche Entsorgung ist möglich,
- da es ein Naturprodukt ist, das zu100 % aus nachwachsenden, pflanzlichen Rohstoffen besteht,
- ist zu 100 % biologisch abbaubar,
- ist bis zu zwei Drittel leichter als herkömmliche klumpende Streuprodukte,
- hat eine sehr geringes Abfallgewicht,
- ist staubarm,
- einfach zu handhaben,
- unparfümiert und
- sicher für Menschen, Tiere und die Umwelt.

## Patentansprüche

1. Verfahren zur Herstellung eines absorbierenden Materials aus mindestens einem pflanzlichen Rohstoff, welches die folgenden Schritte umfasst:
- Mahlen ganzer Getreidekörner;
- Extrudieren der gemahlenen Getreidekörner zu Kügelchen;
- Kühlen der Kügelchen vor dem Mahlen; und
- Mahlen der Kügelchen zum absorbierenden Material.

2. Verfahren nach Anspruch 1, **dadurch gekennzeichnet, dass** die Getreidekörner bis auf eine Korngröße von kleiner als 3 mm, vorzugsweise kleiner als 2 mm, besonders bevorzugt kleiner als 1 mm, gemahlen werden.

3. Verfahren nach Anspruch 1 oder 2, **dadurch gekennzeichnet, dass** ein Anteil von maximal 20 % der gemahlenen Getreidekörner, vorzugsweise maximal 15 %, eine Korngröße kleiner als 250 µm aufweist.

4. Verfahren nach einem der Ansprüche 1 bis 3, **dadurch gekennzeichnet, dass** die gemahlenen Getreidekörner auf einen Feuchtgehalt von 10 bis 20 %, vorzugsweise 12 bis 15 %, besonders bevorzugt 13 bis 14 %, insbesondere 13.5 %, eingestellt werden.

5. Verfahren nach einem der Ansprüche 1 bis 4, **dadurch gekennzeichnet, dass** ganze Körner verschiedener Getreidearten vor dem Mahlen gemischt werden.

6. Verfahren nach Anspruch 5, **dadurch gekennzeichnet, dass** 80 bis 99 % Ganzkorn-Mais mit 1 bis 20 % Ganzkorn-Weizen, vorzugsweise 85 bis 95 % Ganzkorn-Mais mit 5 bis 15 % Ganzkorn-Weizen, besonders bevorzugt ungefähr 90 % Ganzkorn-Mais mit ungefähr 10 % Ganzkorn-Weizen, gemischt werden.

7. Verfahren nach einem der Ansprüche 1 bis 6, **dadurch gekennzeichnet, dass** die extrudierten Getreidekörner zusätzlich granuliert werden.

8. Verfahren nach einem der Ansprüche 1 bis 7, **dadurch gekennzeichnet, dass** die gemahlenen Getreidekörner zu Kügelchen mit einem Durchmesser von ungefähr 1 bis 3 cm, vorzugsweise ungefähr 1.5 bis 2.5 cm, besonders bevorzugt ungefähr 2 cm, extrudiert bzw. granuliert werden.

9. Verfahren nach einem der Ansprüche 1 bis 8, **dadurch gekennzeichnet, dass** das Mahlen der Kügelchen derart erfolgt, dass die Partikel des absorbierenden Materials zu mindestens 80 %, vorzugsweise mindestens 85 %, besonders bevorzugt mindestens 90 %, insbesondere mindestens 95 %, einen Durchmesser von 0.2 bis 10 mm, vorzugsweise 0.3 bis 8 mm, aufweisen.

10. Verfahren nach einem der Ansprüche 1 bis 9, **dadurch gekennzeichnet, dass** das absorbierenden Material nach dem Mahlen gesiebt wird, wobei durch das Sieben staubförmiges Material, vorzugsweise Material mit einem Partikeldurchmesser kleiner als 0.4 mm, insbesondere kleiner als 0.3 mm, abgetrennt wird.

11. Absorbierendes Material aus mindestens einem pflanzlichen Rohstoff, **dadurch gekennzeichnet, dass** der pflanzliche Rohstoff eine Mischung aus 80 bis 99 % Ganzkorn-Mais und 1 bis 20 % Ganzkorn-Weizen umfasst.

12. Absorbierendes Material nach Anspruch 11, **dadurch gekennzeichnet, dass** der pflanzliche Rohstoff eine Mischung aus 85 bis 95 % Ganzkorn-Mais und 5 bis 15 % Ganzkorn-Weizen, bevorzugt ungefähr 90 % Ganzkorn-Mais und 10 % Ganzkorn-Weizen, umfasst.

13. Absorbierendes Material nach Anspruch 11 oder 12, **dadurch gekennzeichnet, dass** das Material Partikel umfasst, die zu mindestens 80 %, vorzugsweise mindestens 85 %, besonders bevorzugt mindestens 90 %, insbesondere mindestens 95 %, einen Durchmesser von 0.2 bis 10 mm, vorzugsweise 0.3 bis 8 mm, aufweisen und/oder dass das Material ein Schüttgewicht zwischen 300 und 500 g/l, vorzugsweise zwischen 350 und 450 g/l, hat.

14. Verwendung des absorbierenden Materials nach einem der Ansprüche 11 bis 13 als Einstreu für Tiere.

15. Verwendung des absorbierenden Materials nach einem der Ansprüche 11 bis 13 als Dekontaminationsmittel.

## Claims

1. A method for producing an absorbent material from at least one vegetable raw material, which comprises the following steps:
- grinding whole cereal grains;
- extruding the ground cereal grains into spheres;
- cooling the spheres before grinding; and
- grinding the spheres to form absorbent material.

2. The method according to claim 1, **characterised in that** the cereal grains are ground to a grain size of less than 3 mm, preferably less than 2 mm, particularly preferably less than 1 mm.

3. The method according to claim 1 or 2, **characterised in that** a fraction of at most 20% of the ground cereal grains, preferably at most 15%, has a grain size of less than 250 µm.

4. The method according to any one of claims 1 to 3, **characterised in that** the ground cereal grains are adjusted to a moisture content of 10 to 20%, preferably 12 to 15%, particularly preferably 13 to 14%, in particular 13.5%.

5. The method according to any one of claims 1 to 4, **characterised in that** whole grains of different types of cereals are mixed before grinding.

6. The method according to claim 5, **characterised in that** 80 to 99% of whole grain maize is mixed with 1 to 20% of whole grain wheat, preferably 85 to 95% of whole grain maize is mixed with 5 to 15% of whole grain wheat, particularly preferably about 90% of whole grain maize is mixed with approximately 10% of whole grain wheat.

7. The method according to any one of claims 1 to 6, **characterised in that** the extruded cereal grains are additionally granulated.

8. The method according to any one of claims 1 to 7, **characterised in that** the ground cereal grains are extruded or granulated to form spheres having a diameter of about 1 to 3 cm, preferably about 1.5 to 2.5 cm, particularly preferably about 2 cm.

9. The method according to any one of claims 1 to 8, **characterised in that** the grinding of the particles is effected in such a manner that at least 80%, preferably at least 85%, particularly preferably at least 90%, in particular at least 95% of the particles of the absorbent material have a diameter of 0.2 to 10 mm, preferably 0.3 to 8 mm.

10. The method according to any one of claims 1 to 9, **characterised in that** after grinding, the absorbent material is sieved, wherein the sieving separates dust-like material, preferably material having a particle diameter of less than 0.4 mm, in particular less than 0.3 mm.

11. An absorbent material made of at least one vegetable raw material, **characterised in that** the vegetable raw material comprises a mixture of 80 to 99% whole grain maize and 1 to 20% whole grain wheat.

12. The absorbent material according to claim 11, **characterised in that** the vegetable raw material comprises a mixture of 85 to 95% whole grain maize and 5 to 15% whole grain wheat, preferably approximately 90% whole grain maize and 10% whole grain wheat.

13. The absorbent material according to claim 11 or 12, **characterised in that** the material comprises particles of which at least 80%, preferably at least 85%, particularly preferably at least 90%, in particular at least 95% have a diameter of 0.2 to 10 mm, preferably 0.3 to 8 mm, and/or that the material has a bulk weight between 300 and 500 g/l, preferably between 350 and 450 g/l.

14. Use of the absorbent material according to any one of claims 11 to 13 as litter for animals.

15. Use of the absorbent material according to any one of claims 11 to 13 as decontamination means.

## Revendications

1. Procédé de fabrication d'un matériau absorbant à partir d'au moins une matière première végétale, ce procédé comprenant les étapes suivantes:
- broyage de grains de céréales entiers;
- extrusion des grains de céréales broyés pour former des petites boules;
- refroidissement des petites boules avant le broyage; et
- broyage des petites boules pour former du matériau absorbant.

2. Procédé selon la revendication 1, **caractérisé en ce que** les grains de céréales sont broyés jusqu'à une granulométrie inférieure à 3 mm, de préférence inférieure à 2 mm, de manière particulièrement préférentielle inférieure à 1 mm.

3. Procédé selon la revendication 1 ou 2, **caractérisé en ce qu'**une proportion maximale de 20 % des grains de céréales broyés, de préférence maximale de 15 %, présente une granulométrie inférieure à 250 µm.

4. Procédé selon une des revendications 1 à 3, **caractérisé en ce qu'**on définit pour les grains de céréales broyés une teneur en humidité de 10 à 20 %, de préférence 12 à 15 %, de manière particulièrement préférentielle 13 à 14 %, notamment 13,5 %.

5. Procédé selon une des revendications 1 à 4, **caractérisé en ce que** des grains entiers de différentes variétés de céréales sont mélangés avant le broyage.

6. Procédé selon la revendication 5, **caractérisé en ce que** 80 à 99 % de grains entiers de maïs sont mélangés à 1 à 20 % de grains entiers de blé, de préférence 85 à 95 % de grains entiers de maïs à 5 à 15 % de grains entiers de blé, de manière particulièrement préférentielle environ 90 % de grains entiers de maïs à environ 10 % de grains entiers de blé.

7. Procédé selon une des revendications 1 à 6, **caractérisé en ce que** les grains de céréales extrudés sont en outre granulés.

8. Procédé selon une des revendications 1 à 7, **caractérisé en ce que** les grains de céréales broyés sont extrudés ou granulés en petites boules ayant un diamètre 1 à 3 cm, de préférence environ 1,5 à 2,5 cm, de manière particulièrement préférentielle environ 2 cm.

9. Procédé selon une des revendications 1 à 8, **caractérisé en ce que** le broyage des petites boules est fait de manière à ce que les particules de matériau absorbant présentent à au moins 80 %, de préférence à au moins 85 %, de manière particulièrement préférentielle à au moins 90 %, notamment au moins 95 %, un diamètre de 0,2 à 10 mm, de préférence 0.3 à 8 mm.

10. Procédé selon une des revendications 1 à 9, **caractérisé en ce que** le matériau absorbant est criblé après broyage, le broyage isolant du matériau sous forme de poussière, de préférence du matériau ayant un diamètre de particules inférieur à 0,4 mm, notamment inférieur à 0,3 mm.

11. Matériau absorbant fait d'au moins une matière première végétale, **caractérisé en ce que** la matière première végétale comprend un mélange de 80 à 99 % de grains entiers de maïs et 1 à 20 % de grains entiers de blé.

12. Matériau absorbant selon la revendication 11, **caractérisé en ce que** la matière première végétale comprend un mélange de 85 à 95 % de grains entiers de maïs et 5 à 15 % de grains entiers de blé, de préférence environ 90 % de grains entiers de maïs et 10 % de grains entiers de blé.

13. Matériau absorbant selon la revendication 11 ou 12, **caractérisé en ce que** le matériau comprend des particules qui présentent à au moins 80 %, de préférence au moins 85 %, de manière particulièrement préférentielle au moins 90 %, notamment au moins 95 %, un diamètre de 0,2 à 10 mm, de préférence 0,3 à 8 mm, et/ou que le matériau a une densité en vrac comprise entre 300 et 500 g/l, de préférence entre 350 et 450 g/l.

14. Utilisation du matériau absorbant selon une des revendications 11 à 13 comme litière pour animaux.

15. Utilisation du matériau absorbant selon une des revendications 11 à 13 comme moyen de décontamination.
